# EUROPÄISCHE PATENTSCHRIFT

(11) **EP 2 708 133 B1**
(45) Veröffentlichungstag und Bekanntmachung des Hinweises auf die Patenterteilung: **01.03.2017**
(21) Anmeldenummer: 12006500.8
(22) Anmeldetag: 14.09.2012
(51) Int. Cl.: A21C 11/16

(54) **Teigdüse sowie Vorrichtung und Verfahren zum Herstellen eines Teigproduktes**
Dough nozzle and apparatus and method for producing a dough product
Buse pour pâte ainsi que procédé et dispositif destinés à la fabrication d'un produit à base de pâte

(43) Veröffentlichungstag der Anmeldung: 19.03.2014
(73) Patentinhaber: HB-Feinmechanik GmbH & Co.KG, 94526 Metten (DE)
(72) Erfinder: Endrass, Bonifaz, 94239 Gotteszell (DE); Käser, Florian, 94569 Stephansposching (DE)
(74) Vertreter: Wunderlich, Rainer

(56) Entgegenhaltungen:
- EP-A1- 1 214 890
- EP-B1- 0 919 127
- DE-A1- 19 705 797
- US-A- 4 322 202
- US-E- R E30 222

## Beschreibung

Die Erfindung betrifft eine Teigdüse zum formgebenden Ausextrudieren einer Teigmasse mit einem Gehäuse, welches einerseits eine Eintrittsöffnung zum Anschluss an einen Extruder und andererseits eine Austrittsöffnung aufweist, welche entsprechend einem Querschnitt eines zu formenden Teigproduktes als eine Düse ausgebildet ist, gemäß dem Oberbegriff des Anspruchs 1.

Des Weiteren betrifft die Erfindung eine Vorrichtung und ein Verfahren zum Herstellen eines Teigproduktes, bei dem zumindest aus Mehl und einer Zubereitungsflüssigkeit in einem Extruder ein Teig gebildet und durch eine Teigdüse ausextrudiert und zu einem Teigprodukt geformt wird, gemäß den Oberbegriffen der Ansprüche 10 beziehungsweise 11.

Eine derartige Vorrichtung und ein derartiges Verfahren zur Herstellung von Teig gehen beispielsweise aus der EP 0 919 127 B1, welche ein Verfahren zum Herstellen eines Teigproduktes gemäß dem Oberbegriff des Anspruchs 11 offenbart, oder WO 2012/104057 A1 hervor. Bei diesen bekannten Vorrichtungen werden zur Teigherstellung Doppelwellenextruder eingesetzt. Im Verlauf des Extruders wird der Teig geknetet und kann durch eine Teigdüse als fertiger Teig ausgetragen werden.

Die Herstellung von Teigprodukten mit einem Extrusionsverfahren ist besonders wirtschaftlich und auch hygienisch, da insgesamt eine nahezu kontinuierliche Produktion erreicht werden kann. Solche Verfahren gehen auch aus der EP 1214890 A1, der US-Re 30,222, welche auch eine Teigdüse gemäß dem Oberbegriff des Anspruchs 1 offenbart, und der US 4,322,202 hervor.

Problematisch bei einer Teigherstellung oder Teigverarbeitung mittels Extruder ist die Temperaturführung des Teiges. Für ein schnelles Ausbilden des Klebergerüstes ist eine höhere Temperatur gewünscht, wobei abhängig vom Mehl bestimmte Temperaturobergrenzen nicht überschritten werden dürfen. Ansonsten verklumpen die Proteine des Teiggrundstoffes und es kann sich kein oder kein ausreichendes Klebergerüst in dem Lebensmittelteig ausbilden.

Es ist daher bekannt, innerhalb des Extruders den Teig zu kühlen. Hierzu sind im Gehäuse oder den Extrusionsschnecken separate Kühleinrichtungen vorgesehen.

Eine zu starke Kühlung des Teiges führt jedoch zu einer übermäßigen Erhöhung der Viskosität der Teigmasse, was wiederum die innere Reibung und auch den Energieverbrauch negativ beeinflusst, so dass der Teig beispielsweise auf eine Temperatur von ca. 30 °C eingestellt wird. Der Teig ist dabei weiterhin relativ zäh und klebrig, was insbesondere eine weitere Verarbeitung und Handhabung des ausextrudierten Teiges erschwert.

Aus der DE 107 05 797 A1 ist eine Nudelmaschine bekannt, bei welcher ein fertiger Nudelteig durch einen Presskopf gedrückt wird. Dieser kann gekühlt werden.

Der Erfindung liegt die Aufgabe zugrunde, eine Teigdüse sowie eine Vorrichtung und ein Verfahren zur Teigherstellung anzugeben, mit welchem sich ein qualitativ hochwertiges Teigprodukt effizient herstellen lässt.

Die Aufgabe wird zum einen durch eine Teigdüse mit den Merkmalen des Anspruchs 1 gelöst. Bevorzugte Ausführungsformen der Erfindung sind in den abhängigen Ansprüchen angegeben.

Die erfindungsgemäße Teigdüse ist dadurch gekennzeichnet, dass das Gehäuse aus zwei trennbaren Gehäusehälften ausgebildet und zumindest in einer Gehäusehälfte eine Temperiereinrichtung vorgesehen ist, mit welcher eine Austrittstemperatur der Teigmasse an der Austrittsöffnung einstellbar ist.

Ein erster Aspekt der Erfindung besteht darin, die Teigmasse nach Durchlauf durch den Extruder in der Teigdüse zu temperieren und insbesondere zu kühlen. Hierdurch kann grundsätzlich in dem vorausgegangenen Extruder mit einer höheren Temperatur gearbeitet werden, so dass sehr schnell das notwendige Teigklebergerüst ausgebildet wird und auch eine geringere innere Reibung und ein geringerer Energieverbrauch erreicht werden. Die gezielte Temperierung der Teigmasse unmittelbar an der Austrittsöffnung erlaubt eine definierte Einstellung der Temperatur des Teigproduktes. Hierdurch lässt sich eine besonders glatte und damit qualitativ hochstehende Oberfläche des Teigproduktes einstellen sowie die weitere Verarbeitbarkeit und Maschinengängigkeit des Teigproduktes in nachfolgenden Bearbeitungsschritten verbessern. So lässt sich etwa ein kühlerer und damit festerer Teig etwa einfacher und genauer schneiden, walzen oder falten und insbesondere laminieren, das heißt eine Sandwichstruktur zu schaffen bestehend aus Teigschicht und Fettschicht. Bei bestimmten Teigrezepturen, etwa Hefeteigen, kann auch eine gewisse Temperaturerhöhung durch die Teigdüse sinnvoll sein.

Ein weiterer Aspekt besteht darin, dass zur gezielten Temperatureinstellung und definierten Anordnung der Temperiereinrichtung die Teigdüse mit zwei trennbaren Gehäusehälften ausgebildet ist. Dies ermöglicht eine noch gezieltere Anordnung der Temperiereinrichtung und Beeinflussung der Temperatur des Teigproduktes.

Es ergibt sich auch eine erhebliche Verbesserung bei der Hygiene. Durch die Teilung kann das Innere der Teigdüse gereinigt werden. Durch ein Aufheizen der Teigdüse durch die Temperiereinrichtung kann diese sterilisiert werden.

Eine bevorzugte Ausführungsform der Erfindung besteht darin, dass zum Bilden der Temperiereinrichtung Fluidkanäle innerhalb zumindest einer Gehäusehälfte ausgebildet sind. Die Fluidkanäle sind über Anschlüsse von außen mit einem Kühl- oder Heizmedium beschickbar. Insbesondere kann die Temperiereinrichtung eine Pumpe und einen Wärmetauscher aufweisen, mit welchen das Kühl-/Heizmedium zirkulieren und auf eine definierte Temperatur eingestellt werden kann.

Grundsätzlich können die beiden Gehäusehälften als abnehmbare Platten ausgebildet sein. Bevorzugt ist es nach einer Ausführungsform der Erfindung, dass die beiden Gehäusehälften über ein Gelenk klappbar miteinander verbunden und über eine Verriegelungseinrichtung verriegelbar sind. Das Gelenk ist insbesondere ein Schwenkgelenk, welches in einem Seitenbereich der beiden plattenförmigen Gehäusehälften angeordnet ist. An dem gegenüberliegenden Seitenbereich ist die Verriegelungseinrichtung vorgesehen. Diese kann im einfachsten Fall aus Schrauben oder Klemmen bestehen, die von Hand betätigt werden. Es ist aber auch eine Schnellverriegelungseinrichtung oder eine energiebetriebene Verriegelungseinrichtung mit einem Stellzylinder möglich.

Nach einer weiteren Ausgestaltungsform der Erfindung ist es vorteilhaft, dass die Fluidkanäle innerhalb von beiden Gehäusehälften angeordnet sind, wobei im Bereich des Gelenkes mindestens eine Schlauchverbindung zum Verbinden der Fluidkanäle in einer Gehäusehälfte mit den Fluidkanälen der anderen Gehäusehälfte vorgesehen ist. Ein flexibler Schlauch kann einer Klappbewegung der beiden Gehäusehälften folgen. In einem einfachen Fall ist lediglich eine einzelne Schlauchverbindung vorgesehen, wobei dann an einer Gehäusehälfte die Zuleitung des Kühlmediums und an der anderen Gehäusehälfte die Ableitung des Kühlmediums aus der Teigdüse vorgesehen ist.

Für eine differenzierte Temperatureinstellung ist es nach der Erfindung vorteilhaft, dass in dem Gehäuse mehrere Temperierzonen vorgesehen sind, in welchen eine unterschiedliche Temperatur einstellbar ist. Hierzu können insbesondere voneinander getrennte Fluidkanäle im Gehäuse der Teigdüse vorgesehen sein. Diese getrennten Fluidkanäle können dann mit einem unterschiedlich temperierten Kühl/Heizmedium, insbesondere als Fluid Wasser oder Öl beaufschlagt werden. Die Fluidkanäle können als Durchgangsbohrungen in den Gehäusehälften ausgebildet sein. Über seitliche Anschlüsse können die einzelnen Fluidkanäle über Verbindungsschläuche beliebig miteinander verschaltet werden.

Bei einer Ausbildungsvariante der Erfindung ist es besonders zweckmäßig, dass die Eintrittsöffnung entsprechend einem Austritt des Extruders etwa ovalförmig und die Austrittsöffnung als ein länglicher schmaler Schlitz zum Extrudieren eines Teigbandes ausgebildet sind und dass innerhalb des Gehäuses ein Teigkanal vorgesehen ist, welcher in einer Strömungsrichtung des Teiges von der etwa ovalförmigen Eintrittsöffnung sich zu einem zylindrischen Kanalabschnitt verändert, welcher allmählich in den Schlitz der Austrittsöffnung übergeht. Der Übergang von ovalförmig auf den zylindrischen Kanalabschnitt kann mittels eines separaten Adapterstücks oder durch ein Abschlusselement am Extruder erfolgen. Nach der Erfindung erfolgt also kein unmittelbarer Übergang von der ovalförmigen Eintrittsöffnung, welche etwa der Form einer liegenden Acht einspricht, hin zu dem schmalen länglichen Schlitz. Sondern zur Vereinheitlichung des Teigmassenstromes verjüngt sich die etwa ovalförmige Kanalform zu einem zylindrischen Kanalabschnitt. Dieser zylindrische Kanalabschnitt verjüngt sich dann in vorzugsweise einer vertikalen Richtung zur Höhe des schmalen Schlitzes, während in einer vorzugsweise horizontalen Richtung eine Verbreiterung auf die Länge des Schlitzes der Austrittsöffnung erfolgt. Eine Temperierung der rung der Teigmasse erfolgt dabei vorzugsweise ausschließlich zwischen dem zylindrischen Kanalabschnitt und der schlitzförmigen Austrittsöffnung.

Eine weitere bevorzugte Ausgestaltungsform der Erfindung besteht darin, dass der Schlitz der Austrittsöffnung zwei parallele Längsseiten aufweist, dass zwischen dem zylindrischen Kanalabschnitt und der Austrittsöffnung ein Parallelabschnitt angeordnet ist, in welchem eine Bodenwand und eine Deckenwand des Teigkanales parallel verlaufen, und dass in dem Parallelabschnitt eine separate Temperierzone vorgesehen ist. Auf diese Weise kann zur Ausbildung eines besonders empfindlichen Teigbandes eine exakte Temperatureinstellung über die Breite des Austrittsschlitzes erfolgen. Insbesondere kann dabei eine Temperierung und insbesondere eine Kühlung von beiden Seiten, also von der Boden- und der Deckenseite, durchgeführt werden.

Eine besonders gute Temperaturführung kann vorzugsweise dadurch erreicht werden, dass das Gehäuse aus Aluminium gefertigt ist und der Teigkanal mit einer Antihaftbeschichtung, insbesondere einer Teflonbeschichtung, versehen ist. Das Gehäuse aus Aluminium erlaubt eine besonders gute Wärmeübertragung, was für eine exakte Temperatureinstellung förderlich ist. Dies wird durch das Vorsehen einer Antihaftbeschichtung unterstützt, wodurch ein möglichst gleichmäßiges, reibungsarmes Überstreichen der Teigmasse entlang der Wende des Teigkanales ermöglicht wird.

Eine weitere Verbesserung der Teigproduktqualität und insbesondere der Teigbandqualität ist dadurch erreichbar, dass an der Austrittsöffnung ein leistenförmiges Glättwerkzeug angeordnet ist. Dieses leistenförmige Glättwerkzeug ist insbesondere aus Kunststoff gefertigt, welches selbst eine Antihafteigenschaft aufweist oder ebenfalls mit einer Antihaftbeschichtung versehen ist. Ein derartiges Glättwerkzeug unterstützt eine möglichst glatte, geschlossene Oberfläche des Teigproduktes.

Eine vorteilhafte Ausführungsform der Erfindung besteht weiterhin darin, dass an dem Gehäuse mindestens ein Stellglied vorgesehen ist, welches von außerhalb des Gehäuses mittels einer Stelleinrichtung in den Teigkanal zur Beeinflussung einer Strömung der Teigmasse einbringbar ist. Vorzugsweise können mehrere Stellglieder vorgesehen sein. Die Stellglieder können bolzenartig mit rundem oder eckigem Querschnitt ausgebildet sein. Als Stelleinrichtung kann ein Gewinde oder andere Verstellelemente, insbesondere Stellzylinder, vorgesehen werden.

Die eingangs genannte Aufgabe wird des Weiteren durch eine Vorrichtung mit den Merkmalen des Anspruchs 10 gelöst. Die Vorrichtung ist insbesondere durch die Verwendung der vorbeschriebenen erfindungsgemäßen Teigdüse gekennzeichnet.

Des Weiteren wird die eingangs angeführte Aufgabe durch ein Verfahren mit den Merkmalen des Anspruchs 11 gelöst. Das erfindungsgemäße Verfahren ist dadurch gekennzeichnet, dass durch Temperierung der Teigdüse eine definierte Temperatur des Teigproduktes an einer Austrittsöffnung der Teigdüse eingestellt wird. Hierzu werden insbesondere die zuvor beschriebene Teigdüse und deren Ausführungsvarianten eingesetzt. Es ergeben sich die vorausgehend beschriebenen Vorteile. Die Teigherstellung bzw. die Teigknetung im Extruder findet auf einem Temperaturniveau statt, welches geeignet und vorteilhaft für die Ausbildung des Teigklebergerüstes ist.

Am Ende der Teigherstellung wird durch das Temperieren der Teigdüse eine definierte Temperatur realisiert, die zum Beispiel für einen Laminierprozess vorteilhaft ist.

Mit dem erfindungsgemäßen Verfahren lassen sich verschiedenste Teigarten herstellen. Unter dem Begriff Teigprodukt sind nicht nur Endprodukte, wie abgelängte Nudelbänder oder sonstige Nudelextrudate zu verstehen, sondern auch Zwischenprodukte, welche vorzugsweise unmittelbar nach dem Ausextrudieren weiter verarbeitet werden. So kann etwa bei der Herstellung von Backteigprodukten ein weiteres Laminieren oder Falten in einem kontinuierlichen sich anschließenden Prozess durchgeführt werden.

Nach der Erfindung wird der Teig innerhalb der Teigdüse gekühlt und auf eine Temperatur zwischen 5 °C und 20 °C eingestellt. Der Teig innerhalb der Düse kann so insbesondere auf eine Temperatur eingestellt werden, welche deutlich unterhalb der Temperatur im vorgeschalteten Extruder liegt. Auf diese Weise lässt sich mit der Teigdüse eine definierte Temperatur des Teigproduktes einstellen, welche auf eine nachfolgende Weiterverarbeitung, etwa einem Schneiden, Laminieren, Falten etc., angepasst ist.

Die erfindungsgemäße Teigdüse kann einfach aufgeklappt und gereinigt werden.

Durch eine Aufheizfunktion durch Einleiten eines Heizmediums durch die Kühl- oder Temperierkanäle kann eine sogenannte SIP-Reinigung, also eine "Sterilisation In Process"-Reinigung erfolgen. Hierdurch kann die Teigdüse abhängig von der gewünschten Reinigung für eine vorgesehene Zeit von etwa bis zu einer Stunde auf eine Temperatur von 70 °C bis 100 °C oder mehr aufgeheizt werden.

Der Teig- oder Strömungskanal in der Teigdüse ist betriebspunktunabhängig so ausgelegt, dass unterschiedliche Teigrezepturen bei unterschiedlichen Ausstoßleistungen ohne Anpassungen des Strömungskanales möglich sind. Es kann so ein Teigband mit konstanter Breite und Dicke ausextrudiert werden. Es ist auch möglich, Stellglieder in den Strömungskanal zu integrieren, mit denen die Teigströmungsgeschwindigkeit beeinflusst werden kann. Dies kann auch während des Extrusionsbetriebes erfolgen. Weiterhin kann die Düse als Coextrusionsdüse ausgeführt werden, bei welcher zwei oder mehr Massenströme laminatartig zusammengeführt werden. Auch die Einarbeitung einer Teigfüllung in einer derartigen Düse ist möglich. Grundsätzlich kann die erfindungsgemäße Teigdüse auch mehrere Austrittsöffnungen aufweisen, so dass mehrere Teigstränge extrudierbar sind. Die Querschnittsform des extrudierten Teigstranges ist grundsätzlich beliebig, so dass nicht nur ein schmales Teigband, sondern auch ein runder Teigstrang oder andere Querschnittsformen erzeugt werden können. Die Teigdüse kann auch mit einer Schnitteinrichtung kombiniert werden, so dass Teigprodukte einer vorgegebenen Länge herstellbar sind.

Durch die erfindungsgemäße Ausführung der Teigdüse als Breitschlitzdüse mit mehreren getrennt voneinander regulierbaren Kühlzonen kann ein Teigband extrudiert werden, welches ein konstantes Temperaturniveau über den Teigbandquerschnitt aufweist. So kann in den seitlichen Eckbereichen des Teigbandes eine stärkere Kühlung erfolgen, da diese Bereiche reibungsbedingt eine höhere Erwärmung erfahren können.

In dem Parallelabschnitt ist die Teigbanddicke aufgrund des Expansionsverhaltens des Teiges deutlich kleiner als die Endteigbanddicke. Beispielsweise ist bei einer Endteigbanddicke von 15 mm die Teigbanddicke in dem Parallelabschnitt des Schlitzes der Austrittsöffnung etwa 6 mm bis 7 mm. Weiterhin ist zu einer exakten Formeinstellung ein Glättwerkzeug vorgesehen, welches vorzugsweise trompetenförmig am Austritt der Teigdüse vorgesehen ist. Dieses Expansionsverhalten kann durch die Augestaltung der Parallelzone beeinflusst werden, wobei je dünner die Teigmasse umso schneller die Wärmeabführung und Temperatureinstellung.

Die Erfindung wird nachfolgend anhand von bevorzugten Ausführungsbeispielen weiter beschrieben, welche schematisch in den Zeichnungen dargestellt sind.

In den Zeichnungen zeigen:
- Fig. 1: eine perspektivische Ansicht einer erfindungsgemäßen Teigdüse;
- Fig. 2: eine Drahtlinienansicht der Teigdüse von Fig. 1; und
- Fig. 3: eine perspektivische Ansicht einer erfindungsgemäßen Vorrichtung zum Herstellen eines Teigproduktes.

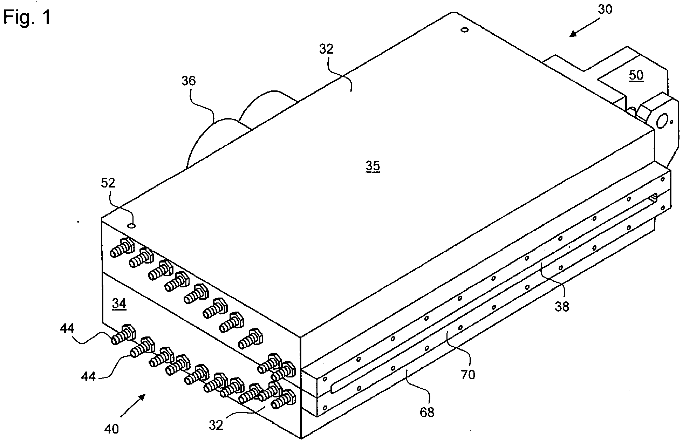

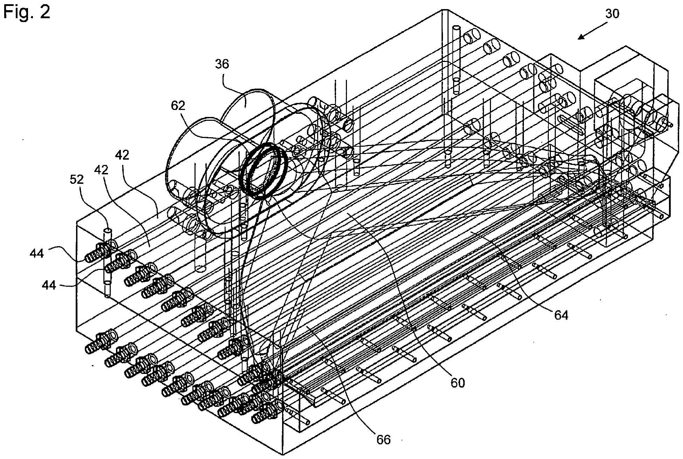

Aufbau und Funktion einer erfindungsgemäßen Teigdüse 30 werden nachfolgend im Zusammenhang mit den Figuren 1 und 2 erläutert.

Ein kastenförmiges Gehäuse 32 der Teigdüse 30 umfasst eine plattenförmige untere Gehäusehälfte 34 und eine im Wesentlichen spiegelsymmetrisch hierzu ausgebildete obere Gehäusehälfte 35. Über ein Klappgelenk 50 an einer Schmalseite des Gehäuses 32 können die beiden Gehäusehälften 34, 35 etwa zum Zwecke der Reinigung aufgeklappt werden. In dem dargestellten zusammengeklappten Zustand werden die beiden Gehäusehälften 34, 35 über eine nur schematisch angedeutete Verriegelungseinrichtung 52, welche im dargestellten Fall aus Schraubbolzen bestehen kann, zusammengehalten.

Die Teigdüse 30 weist an einer Längsseite eine Eintrittsöffnung 36 auf, mit welcher die Teigdüse 30 an den Ausgang eines Doppelwellenextruders angeschlossen werden kann. Grundsätzlich ist die Teigdüse jedoch auch an einen Einwellen- oder Mehrwellenextruder anschließbar.

Entsprechend dem ovalförmigen Ausgang des Extruders, wobei der Austrittsquerschnitt etwa einer liegenden Acht entspricht, ist die Eintrittsöffnung 36 der Teigdüse 30 entsprechend ovalförmig gestaltet. An der gegenüber liegenden Längsseite 68 ist eine schlitzförmige Austrittsöffnung 38 der Teigdüse 30 angeordnet. Entsprechend der Kontur der Austrittsöffnung 38 wird bei dem dargestellten Ausführungsbeispiel ein Teigband ausextrudiert. An der Austrittsöffnung 38 ist ein Glättwerkzeug 70 aus zwei Kunststoffleisten angeordnet. Die schlitzförmige Austrittsöffnung 38 wird durch das Glättwerkzeug 70 leicht trompetenförmig erweitert.

Wie insbesondere aus Fig. 2 zu entnehmen ist, ist innerhalb der Teigdüse 30 ein Teigkanal 60 angeordnet, welcher sich von der Eintrittsöffnung 36 zur Austrittsöffnung 38 erstreckt. Dabei verengt sich die etwa ovalförmige Eintrittsöffnung 36 zunächst zu einem kurzen zylindrischen Kanalabschnitt 62. Daraufhin erweitert sich in horizontaler Richtung der zylindrische Kanalabschnitt 62 zu der schlitzförmigen Austrittsöffnung 38. Gleichzeitig verringert sich die vertikale Höhe des zylindrischen Kanalabschnittes 62 zu der schmalen Schlitzhöhe der Austrittsöffnung 38. Hierdurch ist ein etwa deltaförmiger Fächerabschnitt 64 gebildet, welcher auch als Kleiderbügelabschnitt bezeichnet werden kann.

In dem Bereich unmittelbar vor der Austrittsöffnung 38 verlaufen in einem Parallelabschnitt 66 eine Deckenwand der oberen Gehäusehälfte 35 und eine Bodenwand des Teigkanales 60 der unteren Gehäusehälfte 34 parallel, wobei der Parallelabschnitt 66 gebildet ist. Zumindest in dem Parallelabschnitt 66 sind innerhalb der unteren Gehäusehälfte 34 und der oberen Gehäusehälfte 35 Fluidkanäle 42 zum Bilden einer Temperiereinrichtung 40 ausgebildet.

Zum Bilden der Temperiereinrichtung 40 sind die Fluidkanäle 42 bei der dargestellten Teigdüse 30 als parallele Durchgangsbohrungen ausgeführt, welche sich von einer Schmalseite zur anderen Schmalseite des Gehäuses 32 erstrecken. An den jeweiligen seitlichen Austrittsöffnungen sind nippelförmige Anschlüsse 44 angebracht. Die einzelnen Anschlüsse 44 können über nicht dargestellte Verbindungsschläuche gezielt miteinander verschaltet werden, so dass etwa die Fluidkanäle 44 in der oberen Gehäusehälfte 35 mäanderförmig miteinander verbunden sind. Entsprechend können die Fluidkanäle 42 in der unteren Gehäusehälfte 34 angeordnet und verschaltet sein. Im Bereich des Gelenkes 50 kann zudem eine oder mehrere Schlauchverbindungen zwischen Anschlüssen 44 angeordnet werden, mit welchen unter Beibehaltung der Klappbarkeit die Fluidkanäle 42 der unteren Gehäusehälfte 34 mit den Fluidkanälen 42 der oberen Gehäusehälfte 35 verbunden werden. An zumindest zwei Anschlüssen 44 wird eine Zuleitung und eine Ableitung eines Kühl-/ oder Heizmediums vorgesehen. Es können jedoch auch mehrere Anschlüsse für verschieden temperierte Heizmedien vorgesehen sein, so dass in dem Gehäuse 32 unterschiedliche Temperierzonen mit unterschiedlich eingestellten Temperaturen ausgebildet werden können.

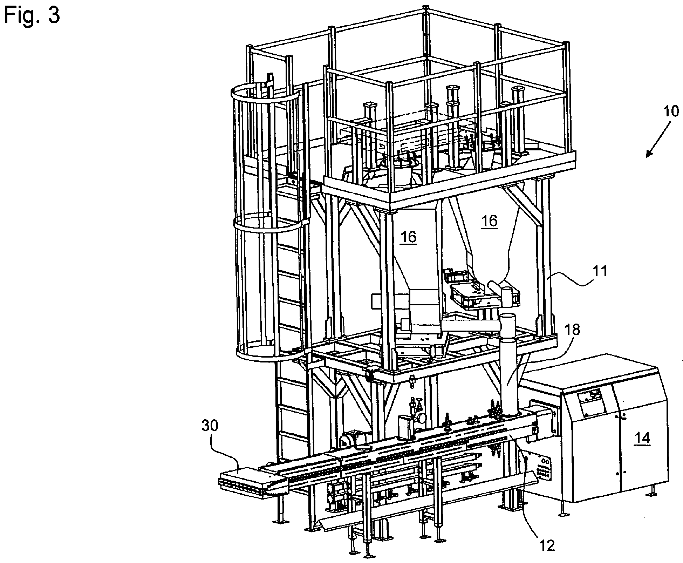

Gemäß Fig. 3 ist eine erfindungsgemäße Vorrichtung 10 zur Herstellung eines Teigproduktes gezeigt, bei welcher die vorgeschriebene erfindungsgemäße Teigdüse 30 am Austritt eines Extruders 12 angeordnet ist. Der Extruder 12 wird in bekannter Weise durch einen Extruderantrieb 14 angetrieben. Mittels eines Rahmenaufbaus 11 werden über Zuführeinrichtungen 16 Mehl und Zuführflüssigkeit über einen Zuführschacht 18 von oben in den Extruder 12 zugeführt. Innerhalb des Extruders 12 erfolgt die Teigzubereitung durch Verkneten und eventuelles Entgasen des Teiges. Dabei kann innerhalb des Extruders 12 eine relativ hohe Temperatur von etwa 30 °C eingestellt werden, wodurch sich in effizienter Weise ein Teig mit einem guten Klebergerüst ausbildet. Durch das Ausextrudieren des fertigen Teiges durch die Teigdüse 30 wird nicht nur das Teigprodukt geformt, sondern gleichzeitig kann durch die Temperiereinrichtung 40 eine definierte Temperatur des Teigproduktes eingestellt werden. Insbesondere kann der Teig in der Teigdüse 30 auf eine Temperatur zwischen 5 °C bis 20 °C, vorzugsweise 10 °C bis 15 °C eingestellt werden. Durch diese Herabsetzung der Temperatur des Teiges wird dieser weniger klebrig, wesentlich fester und plastischer, so dass er für eine Weiterverarbeitung durch weitere maschinelle Komponenten, etwa Laminieren, Falten, Legen, Schneiden etc. besser handhabbar ist.

## Patentansprüche

1. Teigdüse zum formgebenden Ausextrudieren einer Teigmasse, mit einem Gehäuse (32), welches einerseits eine Eintrittsöffnung (36) zum Anschluss an einen Extruder (12) und andererseits eine Austrittsöffnung (38) aufweist, welche entsprechend einem Querschnitt eines zu formenden Teigproduktes als eine Düse ausgebildet ist, wobei das Gehäuse (32) mit zwei trennbaren Gehäusehälften (34, 35) ausgebildet ist,
**dadurch gekennzeichnet,**
**dass** zumindest in einer Gehäusehälfte (34, 35) eine Temperiereinrichtung (40) vorgesehen ist, mit welcher eine Austrittstemperatur der Teigmasse an der Austrittsöffnung (38) einstellbar ist, und
**dass** in dem Gehäuse (32) mehrere Temperierzonen vorgesehen sind, in welchen eine unterschiedliche Temperatur einstellbar ist.

2. Teigdüse nach Anspruch 1,
**dadurch gekennzeichnet,**
**dass** zum Bilden der Temperiereinrichtung (40) Fluidkanäle (42) innerhalb zumindest einer Gehäusehälfte (34, 35) ausgebildet sind.

3. Teigdüse nach Anspruch 1 oder 2,
**dadurch gekennzeichnet,**
**dass** die beiden Gehäusehälften (34, 35) über ein Gelenk (50) klappbar miteinander verbunden und über eine Verriegelungseinrichtung (52) verrieglbar sind.

4. Teigdüse nach Anspruch 3,
**dadurch gekennzeichnet,**
**dass** die Fluidkanäle (42) innerhalb von beiden Gehäusehälften (34, 35) angeordnet sind, wobei im Bereich des Gelenkes (50) mindestens eine Schlauchverbindung zum Verbinden der Fluidkanäle (42) in einer Gehäusehälfte (34) mit den Fluidkanälen (42) der anderen Gehäusehälfte (35) vorgesehen ist.

5. Teigdüse nach einem der Ansprüche 1 bis 4,
**dadurch gekennzeichnet,**
**dass** die Eintrittsöffnung (36) entsprechend einem Austritt des Extruders (12) etwa ovalförmig und die Austrittsöffnung (38) als ein länglicher schmaler Schlitz zum Extrudieren eines Teigbandes ausgebildet sind und
**dass** innerhalb des Gehäuses (32) ein Teigkanal (60) vorgesehen ist, welcher in einer Strömungsrichtung des Teiges von der etwa ovalförmigen Eintrittsöffnung (36) sich zu einem zylindrischen Kanalabschnitt (62) verändert, welcher allmählich in den Schlitz der Austrittsöffnung (36) übergeht.

6. Teigdüse nach Anspruch 5,
**dadurch gekennzeichnet,**
**dass** der Schlitz der Austrittsöffnung (36) zwei parallele Längsseiten (68) aufweist,
**dass** zwischen dem zylindrischen Kanalabschnitt (62) und der Austrittsöffnung (38) ein Parallelabschnitt (66) angeordnet ist, in welchen eine Bodenwand und eine Deckenwand des Teigkanales (60) parallel verlaufen, und
**dass** in dem Parallelabschnitt (66) eine separate Temperierzone vorgesehen ist.

7. Teigdüse nach Anspruch 5 oder 6,
**dadurch gekennzeichnet,**
**dass** das Gehäuse (32) aus Aluminium gefertigt ist und der Teigkanal (60) mit einer Antihaftbeschichtung, insbesondere einer Teflonbeschichtung, versehen ist.

8. Teigdüse nach einem der Ansprüche 1 bis 7,
**dadurch gekennzeichnet,**
**dass** an der Austrittsöffnung (38) ein leistenförmiges Glättwerkzeug (70) angeordnet ist.

9. Teigdüse nach einem der Ansprüche 5 bis 8,
**dadurch gekennzeichnet,**
**dass** an dem Gehäuse (32) mindestens ein Stellglied vorgesehen ist, welches von außerhalb des Gehäuses (32) mittels einer Stelleinrichtung in den Teigkanal (60) einbringbar ist.

10. Vorrichtung zum Herstellen eines Teigproduktes mit einem Extruder (12), in welchem ein Teig aus Mehl und einer Zubereitungsflüssigkeit gebildet wird, wobei der gebildete Teig durch eine Teigdüse (30) zu dem Teigprodukt ausextrudiert und geformt wird,
**dadurch gekennzeichnet,**
**dass** eine Teigdüse (30) nach einem der Ansprüche 1 bis 9 vorgesehen ist.

11. Verfahren zum Herstellen eines Teigproduktes, insbesondere mit einer Vorrichtung (10) nach Anspruch 10, bei dem in einem Extruder (12) zumindest Mehl und eine Zubereitungsflüssigkeit zugeführt werden und hieraus in dem Extruder (12) bei einer ersten Temperatur ein Teig gebildet und durch eine Teigdüse (30) ausextrudiert und zu dem Teigprodukt geformt wird,
**dadurch gekennzeichnet,**
**dass** der Teig beim Ausextrudieren innerhalb der Teigdüse (30) gekühlt wird und
**dass** durch Temperierung der Teigdüse (30) eine definierte Temperatur des Teigproduktes an einer Austrittsöffnung (38) der Teigdüse (30) eingestellt wird, wobei die definierte Temperatur zwischen 5 °C und 20 °C eingestellt wird.

## Claims

1. Dough nozzle for extruding a dough mass in a shaping manner, with a housing (32) having an inlet opening (36) on one side for connection to an extruder (12) and an outlet opening (38) on the other side, which is designed as a nozzle according to a cross section of a dough product to be shaped, wherein the housing (32) is designed of two separable housing halves (34, 35),
**characterized in that**
in at least one housing half (34, 35) a temperature control means (40) is provided, with which an outlet temperature of the dough mass can be set at the outlet opening (38), and
**in that** in the housing (32) several temperature control zones are provided, in which a different temperature can be set.

2. Dough nozzle according to claim 1,
**characterized in that**
in order to form the temperature control means (40) fluid channels (42) are designed inside at least one housing half (34, 35).

3. Dough nozzle according to claim 1 or 2,
**characterized in that**
the two housing halves (34, 35) are connected to each other in a folding manner by a joint (50) and can be locked by a locking means (52).

4. Dough nozzle according to claim 3,
**characterized in that**
the fluid channels (42) are arranged inside both housing halves (34, 35), wherein at least one hose connection is provided in the area of the joint (50) in order to connect the fluid channels (42) in one housing half (34) with the fluid channels (42) of the other housing half (35).

5. Dough nozzle according to any one of claims 1 to 4,
**characterized in that**
the inlet opening (36) is designed in an approximately oval-shaped manner according to an outlet of the extruder (12) and the outlet opening (38) is designed as an elongate narrow slot for extruding a dough sheet and
**in that** inside the housing (32) a dough channel (60) is provided which changes in a flow direction of the dough from the approximately oval-shaped inlet opening (36) to a cylindrical channel section (62) which gradually merges into the slot of the outlet opening (38).

6. Dough nozzle according to claim 5,
**characterized in that**
the slot of the outlet opening (38) has two parallel longitudinal sides (68),
**in that** between the cylindrical channel section (62) and the outlet opening (38) a parallel section (66) is arranged, in which a bottom wall and a ceiling wall of the dough channel (60) run in parallel, and
**in that** in the parallel section (66) a separate temperature control zone is provided.

7. Dough nozzle according to claim 5 or 6,
**characterized in that**
the housing (32) is made of aluminum and the dough channel (60) is provided with a non-stick coating, in particular a Teflon coating.

8. Dough nozzle according to any one of claims 1 to 7,
**characterized in that**
at the outlet opening (38) a strip-shaped smoothing tool (70) is arranged.

9. Dough nozzle according to any one of claims 5 to 8,
**characterized in that**
on the housing (32) at least one positioning member is provided which can be introduced from outside the housing (32) by mens of a positioning means into the dough channel (60).

10. Device for producing a dough product with an extruder (12), in which dough is formed of flour and a preparation liquid, wherein the formed dough is extruded and shaped to the dough product through a dough nozzle (30),
**characterized in that**
a dough nozzle (30) according to any one of claims 1 to 9 is provided.

11. Method for producing a dough product, in particular with a device (10) according to claim 10, in which at least flour and a preparation liquid are fed into an extruder (12) and dough is formed therefrom in the extruder (12) at a first temperature and extruded and shaped to the dough product through a dough nozzle (30),
**characterized in that**
during extrusion the dough is cooled inside the dough nozzle (30) and
**in that** through temperature control of the dough nozzle (30) a defined temperature of the dough product is set at an outlet opening (38) of the dough nozzle (30), wherein the defined temperature is set between 5 °C and 20 °C.

## Revendications

1. Buse pour pâte servant à mettre en forme une masse de pâte par extrusion, avec un boîtier (32), qui présente d'une part une ouverture d'entrée (36) destinée à être raccordée à une extrudeuse (12) et d'autre part une ouverture de sortie (38), qui est réalisée sous la forme d'une buse de manière à correspondre à une section transversale du produit à base de pâte à mettre en forme, dans laquelle le boîtier (32) est réalisé avec deux moitiés de boîtier (34, 35) pouvant être séparées,
**caractérisée en ce**
**qu'**est prévu, au moins dans une moitié de boîtier (34, 35), un dispositif de régulation de température (40), avec lequel une température de sortie de la masse de pâte peut être réglée au niveau de l'ouverture de sortie (38), et
**que** sont prévues, dans le boîtier (32), plusieurs zones de régulation de température, dans lesquelles une température différente peut être réglée.

2. Buse pour pâte selon la revendication 1,
**caractérisée en ce**
**que** des canaux de fluide (42) sont réalisés à l'intérieur au moins d'une moitié de boîtier (34, 35) afin de former le dispositif de régulation de température (40).

3. Buse pour pâte selon la revendication 1 ou 2,
**caractérisée en ce**
**que** les deux moitiés de boîtier (34, 35) sont reliées l'une à l'autre de manière rabattable par l'intermédiaire d'une articulation (50) et peuvent être verrouillées par l'intermédiaire d'un dispositif de verrouillage (52).

4. Buse pour pâte selon la revendication 3,
**caractérisée en ce**
**que** les canaux de fluide (42) sont disposés à l'intérieur des deux moitiés de boîtier (34, 35), dans laquelle au moins un système de connexion de tuyau flexible servant à relier les canaux de fluide (42) dans une moitié de boîtier (34) aux canaux de fluide (42) de l'autre moitié de boîtier (35) est prévu dans la zone de l'articulation (50).

5. Buse pour pâte selon l'une quelconque des revendications 1 à 4,
**caractérisée en ce**
**que** l'ouverture d'entrée (36) est réalisée de manière à présenter une forme sensiblement ovale de manière à correspondre à une sortie de l'extrudeuse (12) et l'ouverture de sortie (38) est réalisée sous la forme d'une fente étroite allongée, servant à extruder une bande de pâte, et
**qu'**est prévu, à l'intérieur du boîtier (32), un canal pour pâte (60), qui se modifie, dans une direction d'écoulement de la pâte, depuis l'ouverture d'entrée (36) présentant une forme sensiblement ovale en direction d'un tronçon de canal (62) cylindrique, qui progressivement se prolonge en la fente de l'ouverture de sortie (36).

6. Buse pour pâte selon la revendication 5,
**caractérisée en ce**
**que** la fente de l'ouverture de sortie (36) présente deux côtés longitudinaux (68) parallèles,
**qu'**est disposé, entre le tronçon de canal (62) cylindrique et l'ouverture de sortie (38), un tronçon parallèle (66), dans lequel une paroi de fond et une paroi supérieure du canal pour pâte (60) s'étendent de manière parallèle, et
**qu'**une zone de régulation de température séparée est prévue dans le tronçon parallèle (66).

7. Buse pour pâte selon la revendication 5 ou 6,
**caractérisée en ce**
**que** le boîtier (32) est confectionné en aluminium, et le canal pour pâte (60) est pourvu d'un revêtement antiadhésif, en particulier d'un revêtement en téflon.

8. Buse pour pâte selon l'une quelconque des revendications 1 à 7,
**caractérisée en ce qu'**un outil de lissage (70) présentant une forme de baguette est disposé au niveau de l'ouverture de sortie (38).

9. Buse pour pâte selon l'une quelconque des revendications 5 à 8,
**caractérisée en ce**
**qu'**est prévu, au niveau du boîtier (32), au moins un organe de réglage, qui peut être introduit dans le canal pour pâte (60) depuis l'extérieur du boîtier (32) au moyen d'un dispositif de réglage.

10. Dispositif servant à fabriquer un produit à base de pâte avec une extrudeuse (12), dans lequel une pâte est formée à partir de farine et d'un liquide de préparation, dans lequel la pâte ainsi formée est extrudée à travers une buse pour pâte (30) et mise en forme en le produit à base de pâte,
**caractérisé en ce**
**qu'**une buse pour pâte (30) selon l'une quelconque des revendications 1 à 9 est prévue.

11. Procédé servant à fabriquer un produit à base de pâte, en particulier avec un dispositif (10) selon la revendication 10, dans lequel au moins de la farine et un liquide de préparation sont introduits dans une extrudeuse (12), à partir desquels une pâte est formée dans l'extrudeuse (12) à une première température et est extrudée à travers une buse pour pâte (30) et est mise en forme en le produit à base de pâte,
**caractérisé en ce**
**que** la pâte est refroidie à l'intérieur de la buse pour pâte (30) lors de l'extrusion, et qu'une température définie du produit à base de pâte est réglée au niveau d'une ouverture de sortie (38) de la buse pour pâte (30) par une régulation de température de la buse pour pâte (30), la température définie étant réglée entre 5 °C et 20 °C.
